# EUROPÄISCHE PATENTSCHRIFT

(11) **EP 2 997 869 B1**
(45) Veröffentlichungstag und Bekanntmachung des Hinweises auf die Patenterteilung: **17.05.2017**
(21) Anmeldenummer: 14003266.5
(22) Anmeldetag: 20.09.2014
(51) Int. Cl.: A47L 9/00

(54) **Selbstfahrendes Arbeitsgerät**
Self-propelled work device
Robot de travail automoteur

(43) Veröffentlichungstag der Anmeldung: 23.03.2016
(73) Patentinhaber: Viking GmbH, 6336 Langkampfen (AT)
(72) Erfinder: Gottinger, Clemens, 6330 Kufstein (AT); Auer, Gerhard, 5090 Lofer (AT)
(74) Vertreter: Reinhardt, Annette

(56) Entgegenhaltungen:
- EP-A1- 2 412 219
- EP-A1- 2 417 894
- WO-A1-2013/125991
- DE-U1- 20 119 853

## Beschreibung

Die Erfindung betrifft ein selbstfahrendes Arbeitsgerät der im Oberbegriff des Anspruchs 1 angegebenen Gattung.

Aus der EP 2 417 894 A1 ist ein selbstfahrendes Arbeitsgerät, nämlich ein Staubsauger bekannt. Der Staubsauger besitzt eine Klappe, die einen Aufnahmeraum für einen Schmutzsammelbehälter verschließt. In vollständig geöffneter Stellung betätigt die Klappe einen Schalter, so dass erkannt wird, wenn die Klappe vollständig geöffnet ist. Die Klappe ist fest am Gehäuse gelagert, so dass der Bediener den Staubsauger an der Klappe greifen und hochheben kann. Wird die Klappe dabei in einem schrägen Winkel gehalten, so kann das Arbeitsgerät weder erkennen, dass die Klappe geöffnet ist, noch dass der Bediener das Arbeitsgerät hochhebt.

Der Erfindung liegt die Aufgabe zugrunde, ein selbstfahrendes Arbeitsgerät der gattungsgemäßen Art zu schaffen, bei dem ein Hochheben des Arbeitsgeräts im Betrieb an der Klappe vermieden ist.

Diese Aufgabe wird durch ein selbstfahrendes Arbeitsgerät mit den Merkmalen des Anspruchs 1 gelöst.

Dadurch, dass das zweite Teil der Klappe sich bei Überschreiten der konstruktiv vorgegebenen Auszugskraft von dem ersten Teil löst, kann das Arbeitsgerät nicht an der Klappe hochgehoben werden. Die Klappe ist dabei dazu vorgesehen, mindestens ein Bedienelement des Arbeitsgeräts in geschlossener Stellung abzudecken.

Vorteilhaft ist das zweite Teil an dem ersten Teil über mindestens eine lösbare Verbindung gehalten. Bei Überschreiten der konstruktiv vorgegebenen Auszugskraft löst sich das zweite Teil von dem ersten Teil dadurch ohne Beschädigung oder Zerstörung eines der beiden Teile. Dadurch ist zwar vermieden, dass der Bediener das Arbeitsgerät an der Klappe hochheben kann, allerdings löst sich nur das zweite Teil von dem ersten Teil, wenn der Bediener das Arbeitsgerät an der Klappe versucht hochzuheben, ohne dass Teile des Arbeitsgeräts beschädigt oder zerstört werden.

Eine einfache Gestaltung ergibt sich, wenn die lösbare Verbindung eine Rastverbindung ist, die ein Rastelement umfasst. Das Rastelement ist vorteilhaft an einem Arm eines Teils ausgebildet und rastet an einem Rastrand des anderen Teils ein. Der Rastrand begrenzt insbesondere eine Rastöffnung, in die das Rastelement in eingerastetem Zustand mindestens teilweise ragt. Eine einfache, vorteilhafte Gestaltung ergibt sich, wenn der Arm an dem ersten Teil angeordnet ist und das zweite Teil die Rastöffnung aufweist. Über das Rastelement an dem Arm und den Rastrand kann die konstruktiv vorgegebene Auszugskraft einfach durch entsprechende Gestaltung, beispielsweise durch Gestaltung der Rasttiefe und der Rastschrägen, eingestellt werden. Die konstruktiv vorgegebene Auszugskraft, bei der sich das zweite Teil von dem ersten Teil löst, ist vorteilhaft kleiner als die Gewichtskraft des Arbeitsgeräts. Insbesondere ist die vorgegebene Auszugskraft kleiner als die Gewichtskraft des Arbeitsgeräts ohne die Gewichtskraft des zweiten Teils. Dadurch ist sichergestellt, dass das Arbeitsgerät an dem zweiten Teil nicht hochgehoben werden kann.

Das erste Teil ist vorteilhaft in Richtung auf die geöffnete Stellung der Klappe gefedert gelagert. Wird das zweite Teil von dem ersten Teil gelöst, federt das erste Teil vorteilhaft in seine geöffnete Stellung. Bei nicht vollständig geschlossener Klappe ist vorteilhaft der Fahrantrieb und/oder eine Antriebseinrichtung für mindestens ein Werkzeug des Arbeitsgeräts ausgeschaltet. Das zweite Teil weist vorteilhaft mindestens eine Rastkontur auf, die in geschlossener Stellung der Klappe am Gehäuse verrastet und die Klappe in geschlossener Stellung hält. Dadurch, dass die Rastkontur an dem zweiten Teil angeordnet ist, ist ein Verrasten der Klappe bei gelöstem zweiten Teil nicht mehr möglich. Das erste Teil ist dann nicht mehr in der geschlossenen Stellung gehalten und federt aufgrund der Feder in Richtung auf die geöffnete Stellung der Klappe. Vorteilhaft besitzt das Arbeitsgerät mindestens einen Sensor zur Erkennung mindestens einer Schwenkstellung des ersten Teils. Über den Sensor wird insbesondere erkannt, wenn die Klappe sich in ihrer geöffneten oder geschlossenen Stellung befindet. Wenn der Bediener das Arbeitsgerät an dem zweiten Teil hochhebt, so löst sich das zweite Teil von dem ersten Teil, und das in Richtung auf seine geöffnete Stellung gefederte erste Teil schwenkt in die geöffnete Stellung. Diese geöffnete Stellung wird von dem mindestens einen Sensor erkannt. Dadurch kann das Arbeitsgerät erkennen, wenn die Klappe geöffnet ist oder sich beispielsweise beim Versuch des Bedieners, das Arbeitsgerät an der Klappe hochzuheben, das zweite Teil von dem ersten Teil gelöst hat. In diesem Fall wird vorteilhaft ein Fahrantrieb und/oder eine Antriebseinrichtung für ein Werkzeug des Arbeitsgeräts ausgeschaltet.

Um eine einfache Montage des Lagerabschnitts am Gehäuse zu erreichen, ist vorteilhaft vorgesehen, dass der Lagerabschnitt in mindestens einer Aufnahme am Gehäuse gelagert ist, wobei die Aufnahme eine Öffnung am Umfang aufweist, über die der Lagerabschnitt in der Aufnahme montierbar ist. Der Lagerabschnitt wird dabei vorteilhaft in die Aufnahme eingeklipst. Die Öffnung der Aufnahme ist insbesondere auf der Seite der Aufnahme angeordnet, die dem zweiten Teil der Klappe abgewandt liegt. Die Aufnahme für die Lagerung des ersten Teils ist vorteilhaft stabil und so fest ausgeführt, dass sich die Klappe im Betrieb nicht unbeabsichtigt von dem Gehäuse lösen kann. Das Lösen der Klappe erfolgt über die lösbare Verbindung zwischen dem zweiten Teil und dem ersten Teil. Dadurch können die Auszugskräfte zur Demontage des Lagerabschnittes vom Gehäuse und zum Lösen des zweiten Teils der Klappe vom ersten Teil unabhängig voneinander ausgelegt werden. So kann die Verbindung des zweiten Teils zum ersten Teil auf eine vergleichsweise geringe Auszugskraft ausgelegt werden. Die Lagerung des Lagerabschnittes am Gehäuse kann stabil und so ausgeführt werden, dass sie nur mit einer großen Auszugskraft zu lösen ist. Dadurch ergibt sich eine hohe Stabilität der Anordnung. Gleichzeitig kann ein Hochheben des Arbeitsgeräts an der Klappe auf einfache Weise vermieden werden. Die Öffnung ist vorteilhaft mindestens teilweise von einer Stopptaste des Arbeitsgeräts abgedeckt. Dadurch wird eine zusätzliche Sicherung des Lagerabschnitts in der Aufnahme erreicht. Gleichzeitig ist die Aufnahme vor Verschmutzungen geschützt.

Um die vollständig geöffnete Stellung der Klappe zu definieren, ist vorteilhaft am ersten Teil ein Anschlag ausgebildet, der mit dem Gehäuse zusammenwirkt. Dadurch, dass der Anschlag am ersten Teil ausgebildet ist, definiert der Anschlag auch die Endstellung des ersten Teils, wenn das zweite Teil vom ersten Teil abgenommen wurde. Zwischen der vollständig geschlossenen und der vollständig geöffneten Stellung legt die Klappe vorteilhaft einen Schwenkweg von etwa 70° bis etwa 110°, insbesondere von etwa 80° bis etwa 100° zurück.

Ein Ausführungsbeispiel der Erfindung wird im Folgenden anhand der Zeichnung erläutert. Es zeigen:
- Fig. 1: eine perspektivische Darstellung eines Arbeitsgeräts,
- Fig. 2: das Arbeitsgerät aus Fig. 1 mit abgenommener Haube,
- Fig. 3: einen schematischen Längsschnitt durch das Arbeitsgerät aus Fig. 1,
- Fig. 4: einen vergrößerten Ausschnitt aus Fig. 3 im Bereich der Klappe,
- Fig. 5: einen vergrößerten Ausschnitt aus Fig. 3 im Bereich der Stopptaste,
- Fig. 6: eine perspektivische Schnittdarstellung des Bereichs der Stopptaste,
- Fig. 7: einen Schnitt entsprechend Fig. 5 bei betätigter Stopptaste,
- Fig. 8: eine Schnittdarstellung des Lagerbereichs der Klappe bei geöffneter Klappe,
- Fig. 9: einen Schnitt durch einen Anschlag am Lagerabschnitt bei geöffneter Klappe,
- Fig. 10: eine perspektivische Darstellung des Gehäuses mit einem daran angeordneten ersten Teil der Klappe,
- Fig. 11: eine perspektivische Darstellung im Bereich des Lagerabschnitts der Klappe,
- Fig. 12 und 13: perspektivische Ansichten des ersten Teils der Klappe,
- Fig. 14 und 15: perspektivische Ansichten des zweiten Teils der Klappe,
- Fig. 16: eine perspektivische Ansicht des Gehäuses im Bereich der Stopptaste,
- Fig. 17 und 18: perspektivische Darstellungen der Stopptaste,
- Fig. 19: eine Draufsicht auf die Platine des Arbeitsgeräts,
- Fig. 20: ein schematisches Diagramm der Messwerte des ersten und zweiten Hallsensors in Abhängigkeit des Schwenkwinkels der Klappe.

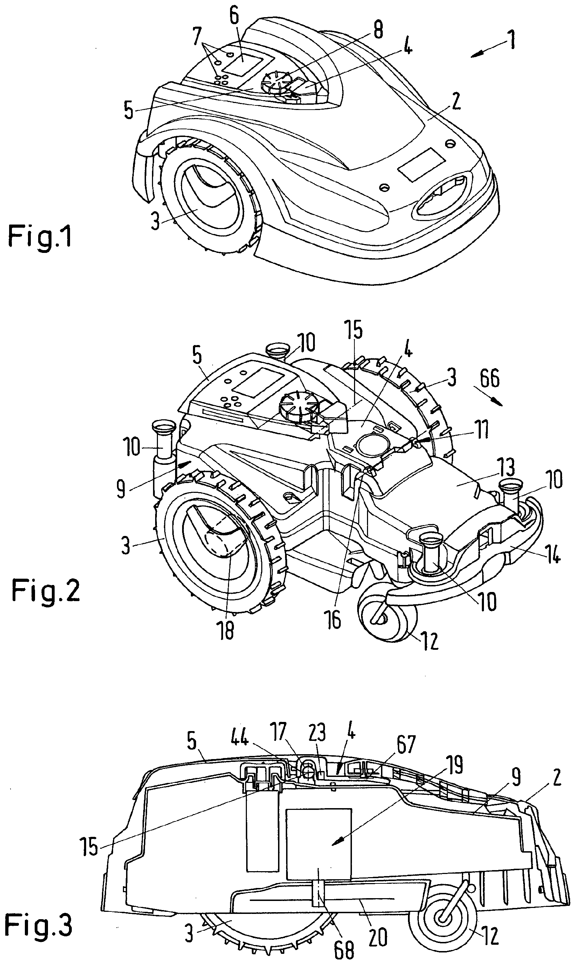

Fig. 1 zeigt ein selbstfahrendes Arbeitsgerät 1, das als Rasenmäher ausgebildet ist. Das selbstfahrende Arbeitsgerät 1 kann auch ein anderes selbstfahrendes Arbeitsgerät, beispielsweise ein Staubsauger oder dergleichen sein. Das Arbeitsgerät 1 ist als autonomes Arbeitsgerät ausgebildet. Es fährt selbsttätig die zu bearbeitende Fläche, beispielsweise eine Rasenfläche, ab, ohne dass ein Bediener anwesend sein muss. Das Arbeitsgerät 1 besitzt eine Haube 2. Im Bereich einer Aussparung der Haube 2 sind eine Stopptaste 4 und eine Klappe 5 angeordnet. Im Ausführungsbeispiel ist die Klappe 5 durchsichtig ausgebildet. Die Klappe 5 deckt ein Display 6 sowie benachbart zum Display 6 angeordnete Bedienelemente 7 ab. Ein weiteres Bedienelement 8 dient zur Einstellung der Schnitthöhe und ist ebenfalls unter der Klappe 5 angeordnet.

Wie auch Fig. 2 zeigt, besitzt das Arbeitsgerät zwei Räder 3, die einen vergleichsweise großen Außendurchmesser besitzen und die das Arbeitsgerät 1 bewegen. Die Räder 3 sind von einem Fahrantrieb 18 angetrieben. Im Ausführungsbeispiel ist für jedes Rad 3 ein eigener Fahrantrieb 18 vorgesehen, der beispielsweise als Elektromotor, gegebenenfalls mit einem zusätzlichen Getriebe, ausgebildet sein kann. Das Arbeitsgerät 1 besitzt außerdem ein Vorderrad 12 mit kleinerem Durchmesser, das schwenkbar gelagert ist und sich so in Fahrtrichtung ausrichten kann. Das Arbeitsgerät 1 besitzt ein Gehäuse 9, an dem die Haube 2 beweglich gelagert ist. Im Ausführungsbeispiel sind zur beweglichen Lagerung der Haube 2 vier Federelemente 10 vorgesehen. Das Gehäuse 9 ist von einem Gehäuseoberteil 13 und einem Gehäuseunterteil 14 gebildet und weitgehend geschlossen ausgeführt. Dadurch sind Verschmutzungen des Inneren des Gehäuses 9 weitgehend vermieden. Am Gehäuseoberteil 13 sind an der im Betrieb oben angeordneten Seite die Klappe 5 und die Stopptaste 4 schwenkbar gelagert. Die Stopptaste 4 ist an einem Schwenklager 11 um eine Schwenkachse 16 schwenkbar gelagert. Die Klappe 5 ist um eine Schwenkachse 15 schwenkbar gelagert. Wie Fig. 2 zeigt, sind die Schwenkachsen 15 und 16 etwa parallel zueinander und im Ausführungsbeispiel etwa parallel zur Drehachse der Räder 3 ausgerichtet. Die Schwenkachse 11 liegt in Fahrtrichtung 66 des Arbeitsgeräts 1 vor der Schwenkachse 15. Die Stopptaste 4 übergreift den Bereich der Schwenkachse 15.

Wie Fig. 3 zeigt, ist im Gehäuse 9 eine Antriebseinrichtung 19 angeordnet, die vorteilhaft einen Elektromotor umfasst und die ein Werkzeug des Arbeitsgerät 1, im Ausführungsbeispiel ein Messer 20, rotierend antreibt. Die Drehachse 68 des Messers 20 steht im Betrieb bei auf dem Boden stehendem Arbeitsgerät 1 etwa senkrecht, so dass sich das Messer 20 in einer etwa horizontalen Ebene bewegt.

Wie die Schnittdarstellung in Fig. 3 auch zeigt, besitzt die Klappe 5 einen Lagerabschnitt 17, an dem die Lagerung um die Schwenkachse 15 ausgebildet ist. Die Stopptaste 4 besitzt einen Abschnitt 44, der den Lagerabschnitt 17 übergreift. Der Abschnitt 44 ist im Querschnitt etwa U-förmig ausgebildet, wobei die Schenkel des U im Ausführungsbeispiel bei auf dem Boden fahrendem Arbeitsgerät 1 nach unten weisen. Die Stopptaste 4 besitzt einen plattenförmigen Grundkörper 67, der weitgehend von der Haube 2 abgedeckt ist. Etwa in dem Bereich, in dem der Abschnitt 44 an den Grundkörper 67 anschließt, ist ein Magnet 23 an der Stopptaste 4 gehalten.

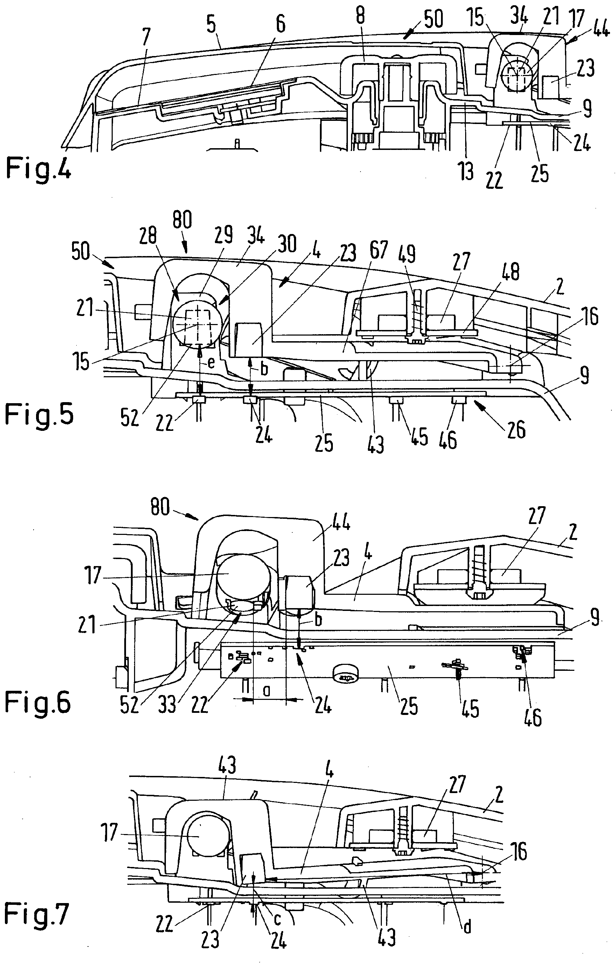

Wie die vergrößerte Darstellung in Fig. 4 zeigt, ist im Gehäuse 9 unterhalb des Gehäuseoberteils 13 eine Platine 25 angeordnet, die Hallsensoren 22 und 24 trägt. Am Lagerabschnitt 17 der Klappe 5 ist ein erster Magnet 21 angeordnet, der mit dem ersten Hallsensor 22 zusammenwirkt und dessen Magnetfeld der erste Hallsensor 22 misst. Das Magnetfeld des zweiten Magnets 23 an der Stopptaste 4 wird von dem zweiten Hallsensor 24 gemessen. Fig. 4 zeigt die Klappe 5 in ihrer geschlossenen Stellung 50. In dieser Stellung deckt die Klappe 5 das Display 6, die Bedienelemente 7 für das Display 6 sowie das Bedienelement 8 für die Höhenverstelleinrichtung des Messers 20 ab. Wie Fig. 4 auch zeigt, ist am Abschnitt 44 der Stopptaste 4 ein Betätigungsabschnitt 34 ausgebildet, der vom Bediener gedrückt werden kann. Der Betätigungsabschnitt 34 ist oberhalb des Lagerabschnitts 17 angeordnet und nicht von der Haube 2 abgedeckt.

Fig. 5 zeigt den Bereich der Stopptaste des Arbeitsgeräts 1 im Einzelnen. Der erste Magnet 21 ist im Bereich der Schwenkachse 15 angeordnet. Im Ausführungsbeispiel schneidet die Schwenkachse 15 den ersten Magneten 21 etwa mittig. Wie Fig. 5 zeigt, besitzt der erste Magnet 21 eine Stirnseite 52, die in der geschlossenen Stellung 50 der Klappe 5 dem ersten Hallsensor 22 zugewandt liegt. Die Stirnseite 52 des Magneten 21 besitzt zum ersten Hallsensor 22 einen Abstand e. Der zweite Magnet 23 besitzt zum zweiten Hallsensor 24 einen Abstand b. Im Ausführungsbeispiel ist der Abstand b deutlich kleiner als der Abstand e. Der Abstand b beträgt vorteilhaft weniger als etwa 80% des Abstands e. Die Stopptaste 5 besitzt an ihrem Grundkörper 67 ein Federelement 43, das sich am Gehäuse 9 abstützt und die Stopptaste 4 in ihre in den Figuren 4 bis 6 gezeigte unbetätigte Stellung 80 vorspannt. Wie Fig. 5 auch zeigt, ist die Klappe 5 an einem Schwenklager 28 am Gehäuse 9 gelagert.

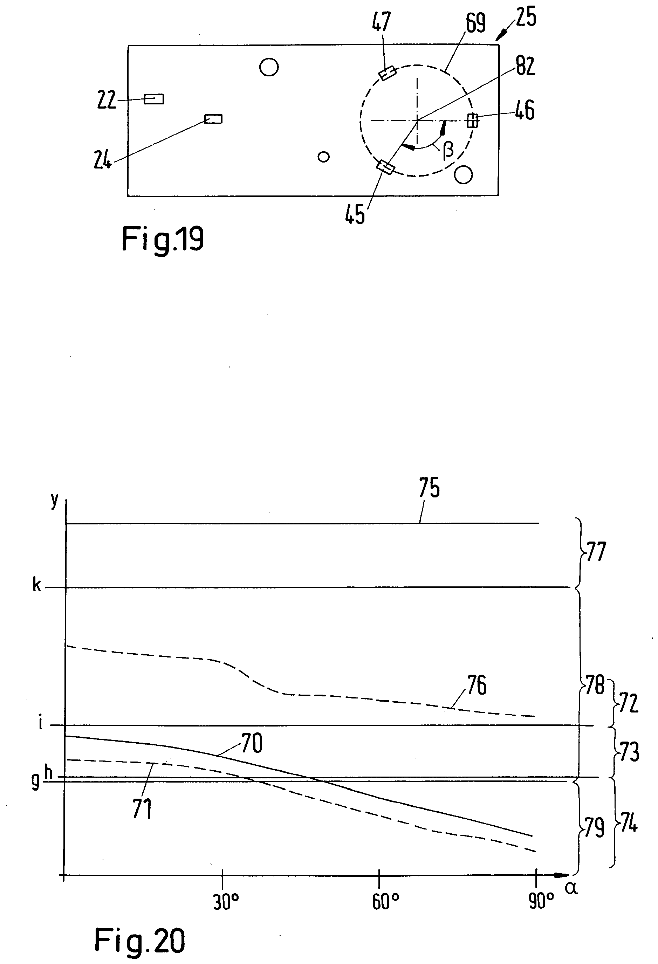

An der Haube 2 ist ein dritter Magnet 27 festgelegt. Der dritte Magnet 27 ist an der dem Gehäuse 9 zugewandten Innenseite der Haube 2 angeordnet und über eine unter dem dritten Magneten 27 angeordnete Scheibe 48 und eine Schraube 49 an der Haube 2 fixiert. Die Platine 25 besitzt weitere Hallsensoren, die im Bereich des Magneten 27 angeordnet sind. In den Darstellungen in Fig. 5 und 6 sind ein dritter Hallsensor 45 und ein vierter Hallsensor 46 sichtbar. Wie die Draufsicht auf die Platine 25 in Fig. 19 zeigt, ist zusätzlich ein fünfter Hallsensor 47 vorgesehen. Die Hallsensoren 45, 46 und 47 sind im Ausführungsbeispiel auf einem gedachten Kreis 69 angeordnet und zueinander jeweils um einen Winkel β um den Kreismittelpunkt 82 versetzt angeordnet. Im Ausführungsbeispiel beträgt der Winkel β zwischen zwei Hallsensoren 45, 46 und 47 jeweils 120°. Wird die Haube 2 parallel zur Ebene der Platine 25 bewegt, so ändert sich das an den Hallsensoren 45, 46 und 47 gemessene Magnetfeld des dritten Magneten 27. Aus der Änderung der Messwerte der Hallsensoren 45, 46 und 47 kann ermittelt werden, in welche Richtung die Haube 2 gegenüber dem Gehäuse 9 verschoben wurde. Dadurch kann die Lage eines Hindernisses, an dem das Arbeitsgerät 1 anstößt, erkannt werden. Die Hallsensoren 45, 46 und 47 bilden zusammen mit dem dritten Magneten 27 eine Erfassungseinrichtung 26 zur Erfassung der Lage der Haube 2. Wie die Figuren 5 und 19 zeigen, sind alle Hallsensoren 22, 24, 45, 46 und 47 auf der gemeinsamen Platine 25 angeordnet.

Wie Fig. 6 zeigt, besitzen die Magnete 21 und 23 nur einen geringen Abstand a zueinander. Die Magnete 21 und 23 sind dabei in Längsrichtung der Schwenkachse 15 (Fig. 5) versetzt zueinander angeordnet. Der Abstand a beträgt vorteilhaft weniger als etwa 5 cm, insbesondere weniger als etwa 3 cm. Dadurch kann die Platine 25 sehr klein ausgeführt werden, und der Betätigungsabschnitt 34 der Stopptaste 4, an dem die Stopptaste 4 bei der Betätigung den größten Schwenkweg ausführt, kann nah am Lagerabschnitt 17 angeordnet werden.

Fig. 7 zeigt die Stopptaste 4 in ihrer betätigten Stellung 81. Die Stopptaste 4 wurde beim Verstellen aus der unbetätigten Stellung 80 in die betätigte Stellung 81 um die Schwenkachse 16 verschwenkt. Der zweite Magnet 23 besitzt zur Schwenkachse 16 einen vergleichsweise großen Abstand d. Im Ausführungsbeispiel beträgt der Abstand d mehr als 5 cm, insbesondere mehr als 8 cm. Dadurch hat sich der Magnet 23 näherungsweise senkrecht zur Platine 25 bewegt. Dadurch hat sich der Abstand zwischen dem Magnet 23 und dem Hallsensor 24 auf einen Abstand c verringert. Das vom Hallsensor 24 gemessene Magnetfeld ist dadurch in betätigter Stellung 81 der Stopptaste 4 größer als in unbetätigter Stellung 80 der Stopptaste 4.

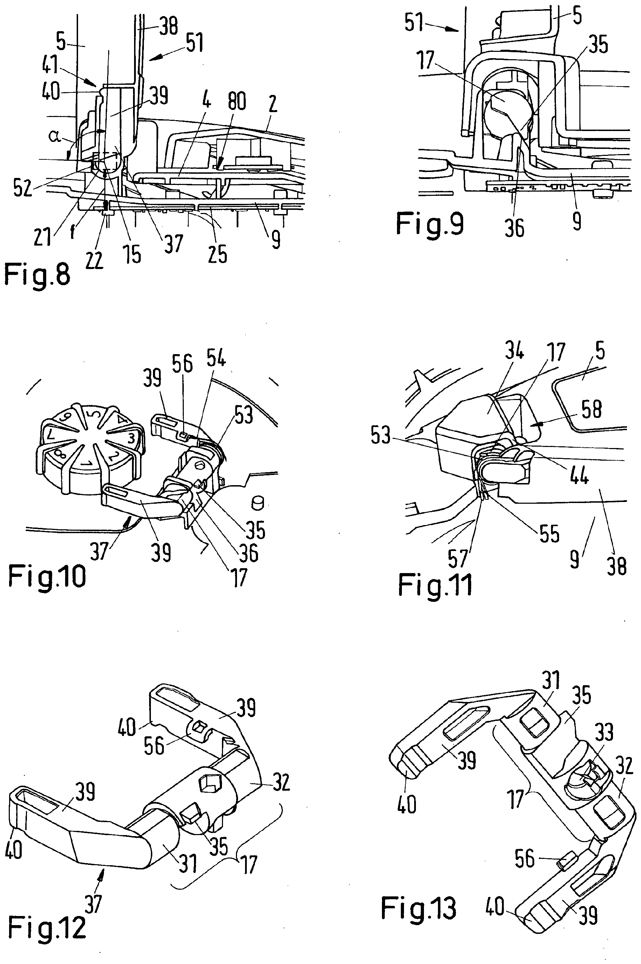

Fig. 8 zeigt die Klappe 5 in ihrer geöffneten Stellung 51 und die Stopptaste 4 in ihrer unbetätigten Stellung 80. Der erste Magnet 21 wurde beim Verschwenken der Klappe 5 in die geöffnete Stellung 51 um die Drehachse 15 gedreht. In der in Fig. 8 gezeigten geöffneten Stellung 51 besitzt der erste Magnet 21 zum ersten Hallsensor 22 einen Abstand f, der im Ausführungsbeispiel geringfügig größer als der Abstand e ist. Die Abstände e, f können auch etwa gleich sein. Wie Fig. 8 zeigt, wurde die Klappe 5 von der geöffneten Stellung 50 um einen Schwenkwinkel α in die geöffnete Stellung 51 verschwenkt. Der Schwenkwinkel α beträgt von etwa 70° bis etwa 110°, vorzugsweise von etwa 80° bis etwa 100°. Im Ausführungsbeispiel beträgt der Schwenkwinkel α näherungsweise 90°. Die Stirnseite 52 des ersten Magneten 21 liegt dem ersten Hallsensor 22 abgewandt und weist zur Seite. Dadurch ist das vom ersten Hallsensor 22 gemessene Magnetfeld des ersten Magneten 21 deutlich geringer als in der geschlossenen Stellung 50 der Klappe 5. Die Änderung des Magnetfeldes, die sich durch das Verschwenken des Magneten 21 um die Drehachse 15 ergibt, ist dabei deutlich größer als die Änderung des Magnetfeldes, die sich durch die Änderung des Abstandes b, c zwischen dem zweiten Magneten 23 und dem zweiten Hallsensor 24 ergibt. Dadurch können die Magnetfeldänderungen gut unterschieden werden, und die Magnete 21 und 23 können in sehr geringem Abstand a zueinander angeordnet werden. Entsprechend können auch die zugeordneten Hallsensoren 22 und 24 in geringem Abstand zueinander angeordnet werden.

Wie Fig. 9 zeigt, ist am Lagerabschnitt 17 ein Anschlag 35 angeordnet, der radial nach außen ragt und mit einer Anschlagfläche 36 des Gehäuses 9 zusammenwirkt, um die vollständig geöffnete Stellung 51 der Klappe 5 zu definieren.

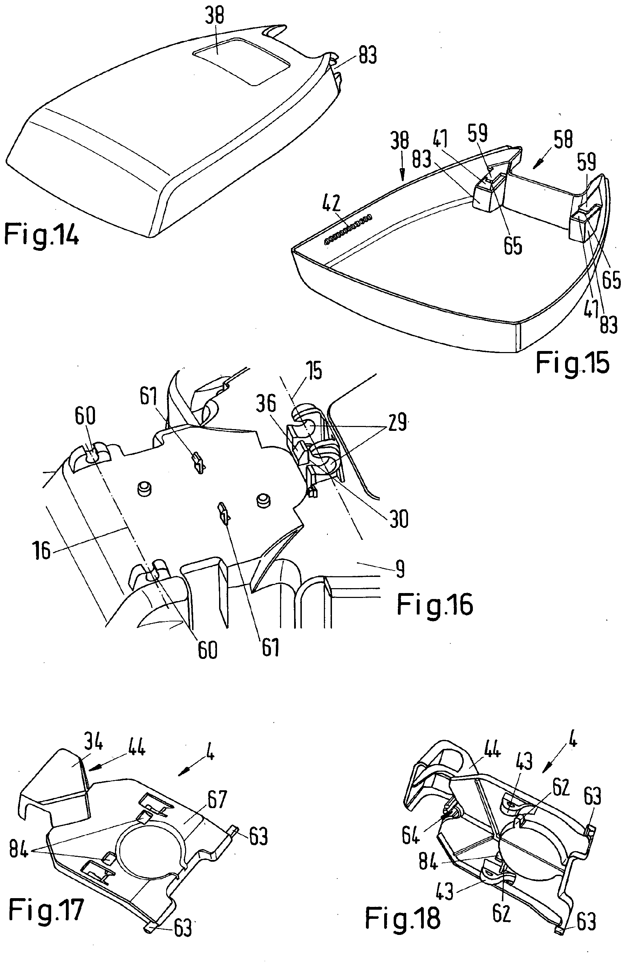

Die Klappe 5 ist aus einem ersten, in Fig. 10 gezeigten Teil 37 und einem zweiten, in den Figuren 14 und 15 gezeigten Teil 38 aufgebaut. Das erste Teil 37 weist den Lagerabschnitt 17 sowie zwei Arme 39 auf. Die Arme 39 dienen zur Verbindung mit dem zweiten Teil 38. Wie Fig. 10 zeigt, ist am Lagerabschnitt 17 eine Feder 53 angeordnet. Ein erster Schenkel 54 der Feder 53 stützt sich an einer Abstützung 56 des ersten Teils 37 ab. Im Ausführungsbeispiel ist die Abstützung 56 an einem Arm 39 des ersten Teils 37 angeformt. Wie Fig. 11 zeigt, besitzt die Feder 53 einen zweiten Schenkel 55, der sich an einer Abstützung 57 am Gehäuse 9 abstützt. Die Feder 53 wirkt zwischen dem ersten Teil 37 und dem Gehäuse 9 und spannt das erste Teil 37 in Richtung auf die vollständig geöffnete Stellung 51 der Klappe 5 vor.

Die Figuren 12 und 13 zeigen das erste Teil 37 im Einzelnen. Der Lagerabschnitt 17 besitzt zwei Lagerstellen 31 und 32, die voneinander beabstandet sind. Zwischen den Lagerstellen 31 und 32 ist der Anschlag 35 angeordnet. Der Lagerabschnitt 17 erstreckt sich von einem Arm 39 zum anderen Arm 39. Die Arme 39 ragen vom Lagerabschnitt 17 radial nach außen und liegen in der gleichen Ebene. Wie Fig. 13 zeigt, ist zwischen den Lagerstellen 31 und 32 eine Vertiefung 33 vorgesehen, die zur Aufnahme des ersten Magneten 21 dient. In Fig. 6 ist der Magnet 21 in der Vertiefung 33 gezeigt. Der Magnet 21 ist vorteilhaft in die Vertiefung 33 eingeklipst.

Wie die Figuren 12 und 13 auch zeigen, besitzt jeder Arm 39 an seinem dem Lagerabschnitt 17 abgewandt liegenden Bereich eine Rasterhöhung 40. Die Rasterhöhung 40 dient zur rastenden Verbindung des ersten Teils 37 mit dem zweiten Teil 38.

Wie Fig. 14 zeigt, bildet das erste Teil 37 den Bereich der Klappe 5, der das Display 6 und die Bedienelemente 7 und 8 abdeckt. Benachbart zur Schwenkachse 15 (Fig. 4) besitzt das erste Teil 38 zwei Aufnahmen 83, in die jeweils ein Arm 39 eingeschoben werden kann. Die Aufnahmen 83 sind an der dem Gehäuse 9 zugewandten Seite von Rastarmen 59 begrenzt, die an ihren freien Enden Rastränder 65 tragen. Die Rastränder 65 begrenzen jeweils eine Rastöffnung 41 der Aufnahmen 83. Durch die Rastöffnungen 41 ragt die Rasterhöhung 40, wie Fig. 8 zeigt. Im Bereich zwischen den Aufnahmen 83 weist das zweite Teil 38 eine Aussparung 58 auf. Im Bereich der Aussparung 58 sind in montiertem Zustand der Klappe 5 der Lagerabschnitt 17 und der Abschnitt 44 der Stopptaste 4 angeordnet, wie Fig. 11 zeigt.

Das zweite Teil 38 besitzt an seiner Innenseite außerdem eine Rastkontur 42, die zur Verrastung mit dem Gehäuse 9 dient. In der vollständig geschlossenen Stellung 50 der Klappe 5 ist die Rastkontur 42 am Gehäuse 9 eingerastet und hält die Klappe 5 entgegen der Kraft der Feder 53 (Figuren 10 und 11) in der geschlossenen Stellung 50 (Fig. 2). Wird das zweite Teil 38 um die Schwenkachse 15 verschwenkt, so gelangt die Rastkontur 42 außer Eingriff mit dem Gehäuse 9, und die Feder 53 drückt die Klappe 5 in ihre geöffnete Stellung 51, bis der Anschlag 35 an der Anschlagfläche 36 anliegt (Fig. 9). Wird das Arbeitsgerät 1 am zweiten Teil 38 der Klappe 5 hochgehoben, so löst sich die aus der Rasterhöhung 40 und dem Rastrand 65 der Öffnung 41 gebildete Rastverbindung. Die Rastverbindung ist dabei so ausgelegt, dass sie sich bei einer Kraft löst, die geringer als die Gewichtskraft des Arbeitsgeräts 1 ist, insbesondere geringer als die Gewichtskraft des Arbeitsgeräts 1 abzüglich des Gewichtes des zweiten Teils 38 der Klappe 5. Wenn sich die Verbindung zwischen dem ersten Teil 37 und dem zweiten Teil 38 gelöst hat, so schwenkt das erste Teil 37 aufgrund der Kraft der Feder 53 in die Stellung, die der geöffneten Stellung 51 der Klappe 5 entspricht. Dies wird vom ersten Hallsensor 22 erkannt. Die Antriebseinrichtung 19 und die Fahrantriebe 18 werden gestoppt, wenn der erste Hallsensor 22 erkennt, dass die Klappe 5 geöffnet ist oder das erste Teil 37 in der Position steht, die der geöffneten Stellung 51 der Klappe 5 zugeordnet ist. Die Fahrantriebe 18 und die Antriebseinrichtung 19 werden auch gestoppt, wenn der zweite Hallsensor 24 das Drücken der Stopptaste 4 erkennt oder die Hallsensoren 45, 46 und 47 eine Bewegung der Haube 2 gegenüber dem Gehäuse 9 feststellen. Wird die Haube 2 nach unten gedrückt, so gelangt die Haube 2 zur Anlage auf den Grundkörper 67 der Stopptaste 4 (Fig. 5), so dass die Stopptaste 4 betätigt wird. Auch dann werden die Antriebseinrichtung 19 und die Fahrantriebe 18 abgeschaltet. Es kann auch vorgesehen sein, nur die Fahrantriebe 18 oder nur die Antriebseinrichtung 19 zu stoppen, wenn einer der Hallsensoren 22, 24, 45, 46, 47 das Öffnen der Klappe 5, das Betätigen der Stopptaste 4 oder ein Verschieben der Haube 2 erkennt.

Fig. 16 zeigt die Lagerung für das erste Teil 37 der Klappe 5 und die Stopptaste 4 am Gehäuse 9 im Einzelnen. Das Schwenklager 28 der Klappe 5 wird durch am Gehäuse 9 angeformte Aufnahmen 29 gebildet. Die Aufnahmen 29 sind zu der der Schwenkachse 16 der Stopptaste 4 zugewandten Seite hin offen. Die Öffnungen 30 der Aufnahmen 29 sind dem Grundkörper 67 der Stopptaste 4 zugewandt, wie Fig. 5 zeigt. Über die Öffnungen 30 kann der Lagerabschnitt 17 mit seinen Lagerstellen 31 und 32 an den Aufnahmen 29 eingeklipst werden. Die Stopptaste 4 übergreift mit ihrem Abschnitt 44 die Öffnungen 30 und verschließt diese. Dadurch kann der Lagerabschnitt 17 nicht unbeabsichtigt aus den Aufnahmen 29 gelangen.

Wie Fig. 16 auch zeigt, besitzt das Gehäuse 9 Lageraufnahmen 60, die Teil des Schwenklagers 11 (Fig. 2) für die Stopptaste 4 sind und in denen die Stopptaste 4 um die Schwenkachse 16 schwenkbar gelagert ist. Im Bereich zwischen den Lageraufnahmen 60 und den Aufnahmen 29 für den Lagerabschnitt 17 sind Halter 61 am Gehäuse 9 angeformt, die als Rasthaken ausgebildet sind. Wie die Figuren 17 und 18 zeigen, besitzt die Stopptaste zwei Öffnungen 84, in denen jeweils ein Halter 61 einrastet. Die Halter 61 halten die Stopptaste 4 entgegen der Kraft der Federelemente 43 in ihrer unbetätigten Stellung 80. Dadurch kann die Stopptaste 4 nicht noch weiter nach oben schwenken und die Öffnungen 30 der Aufnahmen 29 (Fig. 16) freigeben. Benachbart zu den Öffnungen 84 sind Stege 62 vorgesehen, die sich in Richtung auf das Gehäuse 9 erstrecken und Anschläge für die Stopptaste 4 bilden. Benachbart zu den Öffnungen 84 sind Federelemente 43 der Stopptaste 4 angeformt. Die Stopptaste 4 besitzt an ihrem Grundkörper 67 zwei nach außen ragende Lagerstutzen 63, die zur Lagerung in den Lageraufnahmen 60 (Fig. 16) vorgesehen sind. Wie Fig. 18 auch zeigt, besitzt die Stopptaste 4 am Abschnitt 44 eine Aufnahme 64 für den zweiten Magneten 23.

Fig. 20 zeigt schematisch die an den Hallsensoren 22 und 24 gemessenen Messwerte y in Abhängigkeit des Schwenkwinkels α der Klappe 5. Die Kurve 70 zeigt die Messwerte y des ersten Hallsensors 22 bei unbetätigter Stellung 80 der Stopptaste 4, also beim Verschwenken der Klappe 5 aus der in den Figuren 5 und 6 gezeigten Stellung in die in den Figuren 8 und 9 gezeigte Stellung. Die Kurve 71 zeigt die Messwerte y des ersten Hallsensors 22 bei betätigter Stellung 81 (Fig. 7) der Stopptaste 4. Wie Fig. 20 zeigt, hat die Stellung der Stopptaste 4 nur einen geringen Einfluss auf die Messwerte y, die der erste Hallsensor 22 liefert. Die Messwerte y fallen beim Verschwenken der Klappe 5, also bei zunehmendem Schwenkwinkel α, jedoch deutlich und über einen weiten Bereich des Schwenkwinkel α näherungsweise linear ab. Liegt der vom ersten Hallsensor 22 gemessene Messwert oberhalb eines Schwellwertes i in einem Bereich 72, so wird der erste Hallsensor 22 in einer Steuerung des Arbeitsgeräts 1 als defekt bewertet, und der Fahrantrieb 18 und die Antriebseinrichtung 19 werden abgeschaltet. Liegt der Messwert y zwischen dem Schwellwert i und einem zweiten Schwellwert h in einem Bereich 73, so wird die Klappe 5 in der Steuerung als in der geschlossenen Stellung 50 stehend betrachtet. Der Schwellwert h kann geeignet gewählt werden und liegt im Ausführungsbeispiel so, dass die Klappe 5 bei Schwenkwinkeln α von deutlich unter 50° als geschlossen betrachtet wird. Der Schwellwert h kann geeignet gewählt werden, um Fertigungstoleranzen sicher auszugleichen und gleichzeitig eine weitgehend geöffnete Klappe zu ermitteln. Der Schwellwert h wird vorteilhaft so gewählt, dass bei Schwenkwinkeln α, bei denen die Klappe 5 als in der geschlossenen Stellung 50 stehend bewertet wird, die Bedienelemente 7 und 8 nicht betätigt werden können. Liegt der Messwert y des ersten Hallsensors 22 unterhalb des Schwellwertes h in einem Bereich 74, so wird die Klappe 5 als in der geöffneten Stellung 51 stehend betrachtet.

Die Kurven 75 und 76 zeigen Messwerte y des zweiten Hallsensors 24. Die Kurve 75 zeigt den Messwert y in betätigter Stellung 81 der Stopptaste 4. Wie Fig. 20 zeigt, ist der Messwert y weitgehend konstant und unabhängig von der Drehlage der Klappe 5. Die Kurve 76 zeigt den Messwert y in unbetätigter Stellung 80 der Stopptaste 4. In unbetätigter Stellung 80 der Stopptaste 4 sind die Messwerte y deutlich geringer als bei betätigter Stopptaste 4. Gleichzeitig verringert sich der Messwert y bei steigendem Schwenkwinkel α. Bei betätigter Stellung 81 der Stopptaste 4 wird der vom zweiten Hallsensor 24 gemessene Messwert y vom ersten Magneten 21 beeinflusst.

Liegt der Messwert y des zweiten Hallsensors 24 oberhalb eines Schwellwertes k in einem Bereich 77, so erkennt die Steuerung die Stopptaste 4 als in der betätigten Stellung 81 stehend. Liegt der Messwert y zwischen einem Schwellwert g und dem Schwellwert k in einem Bereich 78, so wird die Stopptaste 4 als in der unbetätigten Stellung 80 stehend erkannt. Die Schwellwerte g und h können etwa gleich groß sein. Der Schwellwert g kann auch oberhalb des Schwellwertes h liegen. Liegt der Messwert y des zweiten Hallsensors 24 unterhalb des Schwellwerts g in einem Bereich 79, so wird der zweite Hallsensor 24 als defekt erkannt.

## Patentansprüche

1. Selbstfahrendes Arbeitsgerät mit mindestens einem Fahrantrieb (18) und mit einem Gehäuse (9), wobei an dem Gehäuse (9) mindestens eine Klappe (5) schwenkbar gelagert ist, wobei die Klappe (5) einen Lagerabschnitt (17) aufweist, an dem mindestens ein Schwenklager (28) für die Klappe (5) angeordnet ist,
**dadurch gekennzeichnet, dass** die Klappe (5) in geschlossener Stellung (50) mindestens ein Bedienelement (7, 8) abdeckt, dass der Lagerabschnitt (17) an einem ersten Teil (37) der Klappe (5) ausgebildet ist und dass die Klappe (5) ein zweites Teil (38) besitzt, das das Bedienelement (7, 8) abdeckt und das sich bei Überschreiten einer konstruktiv vorgegebenen Auszugskraft von dem ersten Teil (37) löst.

2. Arbeitsgerät nach Anspruch 1,
**dadurch gekennzeichnet, dass** das zweite Teil (38) an dem ersten Teil (37) über mindestens eine lösbare Verbindung gehalten ist.

3. Arbeitsgerät nach Anspruch 2,
**dadurch gekennzeichnet, dass** die lösbare Verbindung eine Rastverbindung ist, die ein Rastelement umfasst, wobei das Rastelement an einem Arm (39) eines Teils (37) ausgebildet ist und an einem Rastrand (65) des anderen Teils (38) einrastet.

4. Arbeitsgerät nach Anspruch 3,
**dadurch gekennzeichnet, dass** der Rastrand (65) eine Rastöffnung (41) begrenzt, in die das Rastelement in eingerastetem Zustand mindestens teilweise ragt.

5. Arbeitsgerät nach Anspruch 3 oder 4,
**dadurch gekennzeichnet, dass** der Arm (39) an dem ersten Teil (37) angeordnet ist und das zweite Teil (38) die Rastöffnung (41) aufweist.

6. Arbeitsgerät nach einem der Ansprüche 1 bis 5,
**dadurch gekennzeichnet, dass** die konstruktiv vorgegebene Auszugskraft, bei der sich das zweite Teil (38) von dem ersten Teil (37) löst, kleiner als die Gewichtskraft des Arbeitsgeräts ist.

7. Arbeitsgerät nach einem der Ansprüche 1 bis 6,
**dadurch gekennzeichnet, dass** das erste Teil (37) in Richtung auf die geöffnete Stellung der Klappe (5) gefedert gelagert ist.

8. Arbeitsgerät nach einem der Ansprüche 1 bis 7,
**dadurch gekennzeichnet, dass** der Fahrantrieb (18) und/oder eine Antriebseinrichtung (19) für mindestens ein Werkzeug des Arbeitsgeräts (1) bei nicht vollständig geschlossener Klappe (5) ausgeschaltet ist.

9. Arbeitsgerät nach einem der Ansprüche 1 bis 8,
**dadurch gekennzeichnet, dass** das zweite Teil (38) mindestens eine Rastkontur (42) aufweist, die in geschlossener Stellung der Klappe (5) am Gehäuse (9) verrastet und die Klappe (5) in geschlossener Stellung hält.

10. Arbeitsgerät nach einem der Ansprüche 1 bis 9,
**dadurch gekennzeichnet, dass** das Arbeitsgerät mindestens einen Sensor zur Erkennung mindestens einer Schwenkstellung des ersten Teils (37) aufweist.

11. Arbeitsgerät nach einem der Ansprüche 1 bis 10,
**dadurch gekennzeichnet, dass** der Lagerabschnitt (17) in mindestens einer Aufnahme (29) am Gehäuse (9) gelagert ist, wobei die Aufnahme (29) eine Öffnung (30) am Umfang aufweist, über die der Lagerabschnitt (17) in der Aufnahme (29) montierbar ist.

12. Arbeitsgerät nach Anspruch 11,
**dadurch gekennzeichnet, dass** die Öffnung (30) auf der Seite der Aufnahme (29) angeordnet ist, die dem zweiten Teil (38) der Klappe (5) abgewandt liegt.

13. Arbeitsgerät nach Anspruch 12,
**dadurch gekennzeichnet, dass** die Stopptaste (4) die Öffnung (30) mindestens teilweise abdeckt.

14. Arbeitsgerät nach einem der Ansprüche 1 bis 13,
**dadurch gekennzeichnet, dass** am ersten Teil (37) ein Anschlag (35) ausgebildet ist, der mit dem Gehäuse (9) zusammenwirkt und die vollständig geöffnete Stellung der Klappe (5) definiert.

15. Arbeitsgerät nach einem der Ansprüche 1 bis 14,
**dadurch gekennzeichnet, dass** die Klappe (5) zwischen der vollständig geschlossenen und der vollständig geöffneten Stellung einen Schwenkweg von etwa 70° bis etwa 110° zurücklegt.

## Claims

1. Self-propelled work device having at least one drive (18) and having a housing (9), wherein at least one hatch (5) is pivotably mounted on the housing (9), wherein the hatch (5) has a bearing portion (17), on which at least one pivot bearing (28) for the hatch (5) is arranged,
**characterised in that**, when closed, the hatch (5) covers at least one operating element (7, 8), the bearing portion (17) is formed on a first part (37) of the hatch (5), and the hatch (5) has a second part (38), which covers the operating element (7, 8) and disengages from the first part (37) if a constructively predefined withdrawal force is exceeded.

2. Work device according to claim 1,
**characterised in that** the second part (38) is held on the first part (37) via at least one releasable connection.

3. Work device according to claim 2,
**characterised in that** the releasable connection is a detent connection, which comprises a detent element, wherein the detent element is formed on an arm (39) of one part (37) and engages at a detent edge (65) of the other part (38).

4. Work device according to claim 3,
**characterised in that** the detent edge (65) defines a detent opening (41), into which the detent element at least partially projects in the engaged state.

5. Work device according to claim 3 or 4,
**characterised in that** the arm (39) is arranged on the first part (37), and the second part (38) has the detent opening (41).

6. Work device according to one of claims 1 to 5,
**characterised in that** the constructively predefined withdrawal force, at which the second part (38) detaches from the first part (37), is smaller than the weight force of the work device.

7. Work device according to one of claims 1 to 6,
**characterised in that** the first part (37) is spring mounted towards the open position of the hatch (5).

8. Work device according to one of claims 1 to 7,
**characterised in that** the drive (18) and / or a drive device (19) for at least one tool of the work device (1) is / are switched off if the hatch (5) is not completely closed.

9. Work device according to one of claims 1 to 8,
**characterised in that** the second part (38) has at least one detent contour (42) which, in the closed position of the hatch (5), engages on the housing (9) and holds the hatch (5) in the closed position.

10. Work device according to one of claims 1 to 9,
**characterised in that** the work device has at least one sensor for detecting at least one pivot position of the first part (37).

11. Work device according to one of claims 1 to 10,
**characterised in that** the bearing portion (17) is mounted in at least one recess (29) on the housing (9), wherein the recess (29) has an opening (30) at the periphery, via which the bearing portion (17) can be mounted in the recess (29).

12. Work device according to claim 11,
**characterised in that** the opening (30) is arranged on the side of the recess (29) that faces away from the second part (38) of the hatch (5).

13. Work device according to claim 12,
**characterised in that**
the stop button (4) at least partially covers the opening (30).

14. Work device according to one of claims 1 to 13,
**characterised in that** a stop (35) is formed on the first part (37), the stop cooperating with the housing (9) and defining the completely open position of the hatch (5).

15. Work device according to one of claims 1 to 14,
**characterised in that** the hatch (5) covers a pivot path of approximately 70° to approximately 110° between the completely closed and the completely open position.

## Revendications

1. Dispositif automoteur avec au moins un entraînement de roulement (18) et un boîtier (9), au moins un couvercle à charnière (5) étant monté pivotant sur le boîtier (9), ledit couvercle (5) comportant une section de montage (17) sur laquelle est disposé au moins un palier de pivotement (28) pour le couvercle (5), **caractérisé en ce que** le couvercle à charnière (5), en position fermée (50), couvre au moins un élément de commande (7, 8), **en ce que** la section de montage (17) est formée sur une première partie (37) du couvercle (5) et **en ce que** ledit couvercle (5) a une seconde partie (38) qui couvre l'élément de commande (7, 8) et qui, en cas de dépassement d'une force d'extraction prédéfinie par la construction, se détache de la première partie (37).

2. Dispositif selon la revendication 1,
**caractérisé en ce que** la seconde partie (38) est fixée à la première partie (37) par l'intermédiaire d'au moins une liaison amovible.

3. Dispositif selon la revendication 2,
**caractérisé en ce que** la liaison amovible est une liaison par enclenchement qui comprend un élément d'enclenchement, l'élément d'enclenchement étant formé sur un bras (39) d'une partie (37) et venant s'enclencher sur un bord d'enclenchement (65) de l'autre partie (38).

4. Dispositif selon la revendication 3,
**caractérisé en ce que** le bord d'enclenchement (65) délimite une ouverture d'enclenchement (41) dans laquelle l'élément d'enclenchement, à l'état enclenché, dépasse au moins partiellement.

5. Dispositif selon la revendication 3 ou 4,
**caractérisé en ce que** le bras (39) est disposé sur la première partie (37), et la seconde partie (38) présente l'ouverture d'enclenchement (41).

6. Dispositif selon l'une des revendications 1 à 5,
**caractérisé en ce que** la force d'extraction, prédéfinie par la construction, en présence de laquelle la seconde partie (38) se détache de la première partie (37) est inférieure au poids du dispositif.

7. Dispositif selon l'une des revendications 1 à 6,
**caractérisé en ce que** la première partie (37) est montée de manière à faire ressort en direction de la position ouverte du couvercle à charnière (5).

8. Dispositif selon l'une des revendications 1 à 7,
**caractérisé en ce que** l'entraînement de roulement (18) et/ou un dispositif d'entraînement (19) pour au moins un outil du dispositif (1) sont arrêtés si le couvercle à charnière (5) n'est pas complètement fermé.

9. Dispositif selon l'une des revendications 1 à 8,
**caractérisé en ce que** la seconde partie (38) présente au moins un contour d'enclenchement (42) qui, dans la position fermée du couvercle à charnière (5), s'enclenche sur le boîtier (9) et qui maintient ledit couvercle (5) en position fermée.

10. Dispositif selon l'une des revendications 1 à 9,
**caractérisé en ce que** le dispositif comporte au moins un capteur pour détecter au moins une position de pivotement de la première partie (37).

11. Dispositif selon l'une des revendications 1 à 10,
**caractérisé en ce que** la section de montage (17) est montée sur le boîtier (9) dans au moins un logement (29), ledit logement (29) présentant sur sa périphérie une ouverture (30) par l'intermédiaire de laquelle la section de montage (17) est apte à être montée dans le logement (29).

12. Dispositif selon la revendication 11,
**caractérisé en ce que** l'ouverture (30) est disposée sur le côté du logement (29) qui est opposé à la seconde partie (38) du couvercle à charnière (5).

13. Dispositif selon la revendication 12,
**caractérisé en ce que** la touche d'arrêt (4) couvre au moins en partie l'ouverture (30).

14. Dispositif selon l'une des revendications 1 à 13,
**caractérisé en ce qu'**il est prévu, formée sur la première partie (37), une butée (35) qui coopère avec le boîtier (9) et qui définit la position complètement ouverte du couvercle à charnière (5).

15. Dispositif selon l'une des revendications 1 à 14,
**caractérisé en ce que** le couvercle à charnière (5) décrit entre la position complètement fermée et la position complètement ouverte une course de pivotement d'environ 70° à environ 110°.
